# EUROPEAN PATENT SPECIFICATION

(11) **EP 4 105 479 B1**
(45) Date of publication and mention of the grant of the patent: **14.05.2025**
(21) Application number: 21179599.2
(22) Date of filing: 15.06.2021
(51) Int. Cl.: F03G 6/06, F24S 20/20, F28F 9/02, F28D 7/16

(54) **PARTICLE HEAT EXCHANGER FOR A SOLAR TOWER POWER PLANT**
PARTIKELWÄRMETAUSCHER FÜR EIN SOLARTURMKRAFTWERK
ÉCHANGEUR DE CHALEUR À PARTICULES POUR UNE CENTRALE ÉLECTRIQUE À TOUR SOLAIRE

(43) Date of publication of application: 21.12.2022
(73) Proprietor: JOHN COCKERILL RENEWABLES S.A., 4100 Seraing (BE)
(72) Inventor: GUILLICK, Antoine, 4350 Remicourt (BE); DETAILLE, Christopher, 4181 Filot (BE); GUSSO, Fabio, 4050 Chaudfontaine (BE); RICAIL, Jean-François, 4480 Clermont sous Huy (BE); SMOLDERS, Manuel, 4537 Verlaine (BE)
(74) Representative: AWA Benelux

(56) References cited:
- WO-A1-2018/212046
- US-A1- 2012 196 239
- US-A1- 2013 091 721
- US-A1- 2016 076 813

## Description

### Field of the Invention

The present invention relates to installations in the field of heat exchangers using the concept of falling particles as heat transfer medium. In particular the invention is associated to the area of Concentrated Solar Power (CSP) plants in which a heat transfer medium such as molten salt is generally used to convey heat from a solar receiver to a steam generator.

### Background and Prior Art

Currently, molten salt is used as heat transfer and storage medium in nearly all Solar Tower CSP plants due to its good thermal properties. For that reason, the applicant has commercialized a Molten Salt Solar Receiver (MSSR) designed to transmit heat from the incident solar power to the molten salt. The heat contained in the molten salt is exploited to generate superheated steam that will be used to produce electricity in a turbine.

However, using molten salt as heat transfer and storage medium also presents some disadvantages. Indeed, under a certain temperature (240°C for KNO₃-NaNO₃ molten salt), molten salt freezes and can further create some damages to the equipment such as pipe explosion. To avoid this drawback, heat tracing is used to maintain the equipment temperature always above the freezing point. Another limitation of the molten salt is that its operating temperature range is limited: the salt cannot exceed a certain level of temperature otherwise it can deteriorate. Since this operating temperature range is quite limited (usually from 290°C to 565°C for KNO₃-NaNO₃), storage density of molten salt is relatively small.

Furthermore, it is known that ceramic particles are not subject to freezing since they are solid at any temperature and their operating temperature range is much broader than the one of molten salt (from 300°C to 1000°C for bauxite particles). Therefore their storage density is about 2.5 times higher than molten salt storage density. Moreover, due to their higher temperature operating level, ceramic particles can be coupled to high-efficiency thermodynamic cycles, such as supercritical CO₂ cycles.

For these reasons, the use of ceramic particles has been investigated and these are considered good candidates for heat transfer/storage media for the next generation of Solar Tower CSP plants.

To anticipate this next generation of particles Solar Tower CSP plants, the applicant has decided to design a particle steam generator, more particularly in the context of a European H2020 Project called "HiFlex", in which the applicant is partnering. This project consists in the development, the building and the demonstration of a complete commercial Solar Tower CSP plant using particles as heat transfer/storage medium.

The applicant is also involved in the "CompassCO2" project, which consists, among others, in the demonstration of a particles-sCO₂ heat exchanger.

Otherwise, the applicant already developed a molten salt steam generator comprising a shell-and-tube heat exchanger with helicoidal baffles. As solid particles in a fixed bed are intended to be used in the present invention, the concept will be very different.

So, the following points have to be taken into account:
- particles are solid: they cannot be set in motion as easily as a fluid (it should be reminded that the particles are not moving as a fluidized bed, and have a very low speed, e.g. 2 mm/s, so that the bed is considered stationary). Moreover, surfaces of the heat exchanger have to resist to the abrasive property of the solid particles, even if the velocity thereof is quite low ;
- particles at the inlet of the heat exchanger are typically at about 1000°C: the materials of the steam generator have to resist to these high temperatures ;
- particles have a diameter relatively high (typically about 1 mm): spacing inside the heat exchanger has to be designed such that there is no particles clogging between the tubes ;
- particles will be submitted to a spatial thermal gradient in the heat exchanger of about 700°C: tubesheets or other structures supporting the tubes will have to resist to such an important gradient ;
- particles heat transfer coefficient is not so good compared with usual heat transfer fluids: the heat exchange area shall be increased and the design must be such that heat transfer between particles and steam is optimal.

Document WO 2007/128104 A1 discloses a method and an apparatus for indirect-heat thermal processing of material, such as a dryer or evaporator for treatment of particulate material. A dryer for drying particulate material comprises a plurality of heat transfer plates arranged in spaced relationship for the flow of the material to be dried there between and downward. Each heat transfer plate is provided with an inlet and an outlet for the flow of the heating fluid through the plates, so that particles are heated thanks to the heating fluid passing through the plates. A purge fluid delivery system provides a flow of purge fluid, such as air, gas or steam between the plates in a direction across the direction of flow of the material to be dried, to remove evaporated volatiles generated by the indirect heating of the material.

Document WO 2013/163752 A1 discloses a heat exchanger including a housing with an inlet for receiving bulk solids, and an outlet for discharging the bulk solids. A plurality of spaced apart, substantially parallel heat transfer plate assemblies are disposed in the housing between the inlet and the outlet for cooling the bulk solids that flow downwards under gravity from the inlet, between the adjacent heat transfer plate assemblies, to the outlet. In order to protect the parallel plates, a pipe extends along a top end of each heat transfer plate. Cooling fluid that is circulating in these pipes protects the plates from high-temperature particles.

Document WO 2017/024374 A1 discloses an indirect-heat thermal processor for processing bulk solids including a housing with an inlet for receiving the bulk solids and an outlet for discharging the bulk solids and a plurality of heat transfer plate assemblies disposed between the inlet and the outlet and arranged in spaced relationship for the flow of the bulk solids that flow downward from the inlet, between the heat transfer plate assemblies, to the outlet. The heat transfer plate assemblies include temperature detectors, heating elements and heat spreaders. These elements enable control and monitoring of the temperature of the solid bulk. There is no secondary heating/cooling fluid.

Document EP 2 352 962 B1 discloses a heat exchanger air/sand. Particles are flowing in a wall having a single-piece lattice body comprising straight channels. Particles exchange their heat with air that circulates across the particles channels. The sidewalls of the different particle channels are constituted of porous ceramic or metals. Air is heated/cooled by convective transfer with the particles.

Document WO 2021/030875 A1 discloses a vertical tube bundle heat exchanger with a particle moving bed. By moving downward by gravity the particles exchange heat with vertical tubes located in the housing of the heat exchanger. In these tubes is circulating a heating/cooling fluid. With this vertical tube bundle arrangement, there are no void or stagnant zones leading to poor heat transfer.

Document US 2016/076813 A1 discloses the features of the preamble of claim 1, namely a heat exchanger including a housing with an inlet for receiving bulk solids, and an outlet for discharging the bulk solids, a plurality of spaced apart, substantially parallel heat transfer plate assemblies disposed within the housing, between the inlet and the outlet for heating the bulk solids that flow from the inlet, through spaces between the heat transfer plate assemblies, and at least two gas handling zones including a first gas handling zone and a second gas handling zone spaced from the first gas handling zone, the two gas handling zones disposed between the inlet and the outlet for entry of a pulsed flow of air into the housing and around the bulk solids and for exit of the pulsed flow of air from the housing.

Document US 2012/196239 A1 discloses a device for cooling the solid matter from a coal gasification. The device includes a container with a feed part, a cooling part and a venting part. Lines arranged transverse to the flow direction are located inside of the cooling part that are grouped in two kinds, the one carrying liquid and the other carrying gas. The liquid carrying lines are closed in the interior of the cooling part and are provided for the heat exchange. The gas carrying lines are gas permeable into the interior of the cooling part in such a way that solid matter comprising primarily cooled slag, ash and flue dust is cooled and the remaining gas present in and between the solid matter particles is exchanged. A method for cooling down the solid matter and for removing the remaining gas from the particles is also disclosed.

### Aims of the Invention

The present invention aims to implement a new design for a compact, low-cost and highly efficient particle heat exchanger, whenever used with water steam, supercritical CO₂ or other heat exchange media, in order to commercialize it in large-scale CSP power plants.

A particular goal of the invention is to provide an installation designed to serve high-efficiency power cycles that can withstand temperatures that can approach about 1000°C, i.e. much higher than what can be achieved using heat exchange fluids such as oil or molten salt and ordinary metals or alloys for tubing.

Another goal pursued by the invention is to operate the particle heat exchanger at least during 1000 h operation without breaking. However, in this design, an assumption of 10000 h lifetime will be made to be closer to the lifetime requested by large- scale power plants.

### Summary of the Invention

A first aspect of the present invention relates to a heat exchanger comprising a casing, said casing including a top inlet part for receiving hot solid particles and a bottom outlet part for discharging the solid particles after cooling ; and a plurality of spaced apart adjacent heat transfer tubes disposed in the casing between the top inlet part and the bottom outlet part, assembled in at least one tube bundle and intended for the circulation of a coolant fluid, for cooling the solid particles that flow downwards by gravity from the inlet, between the spaced apart adjacent heat transfer tubes, to the outlet ; wherein the spaced apart adjacent heat transfer tubes are arranged in rows substantially transverse to the flow direction of the solid particles, wherein the tube bundle is supported in the casing by at least two tubesheets disposed vertically and laterally near each of both ends of the tubes and wherein each tubesheet is composed of independent plates corresponding to the individual tube rows, adjacent plates being stacked on top of each other thanks to insulated sliding pieces.

According to preferred embodiments, the heat exchanger further comprises at least one of the following characteristics or a suitable combination thereof :
- each substantially transverse tube is connected at each of its ends to another substantially transverse tube, either in a same horizontal row or between two successive horizontal rows, thanks to a 180° pipe elbow ;
- dead chambers are at least partly separating the tubes and tubesheets (7) from the casing, so that in use no particles are present in the dead chambers ;
- the heat exchanger further contains an insulation located on the internal side of the casing and protecting the casing from the particles abrasion ;
- the insulation comprises a layer of refractory concrete in series with a microporous superinsulant, said concrete layer being disposed on a metallic mesh maintained with clips attached to pins welded on the casing ;
- the tubes are respectively connected to an inlet header located in the bottom of the casing and to an outlet header located in the top of the casing, so that the coolant fluid is flowing countercurrent in the heat exchanger;
- the connections between the substantially transverse tubes comprising a 180° pipe elbow are designed so as to allow horizontal spacing between the tubes of a same row as low as 9mm without exceeding a maximum allowable bending radius ;
- said horizontal spacing between the tubes is at least 2.5 times, preferably 10 times, the diameter of the particles ;
- the top inlet part has a rectangular cross-section and a height suitable to uniformly distribute the particles in the heat exchanger and the bottom outlet part is an outlet conical part for assuring suitable mass flow ;
- first thermocouples are disposed at the inlet and the outlet of the heat exchanger, respectively before and after the tube bundle, and second thermocouples are disposed at the tube bends of the last tube row before the outlet, said first thermocouples being also disposed in corresponding sliding drawers ;
- at least one slope is arranged at the bottom of the dead chambers so as to drain particles in case of sealing issue ;
- the connecting end of the tubesheet plates with the insulated sliding piece is of female design, while the connecting end of the insulated sliding piece is of male design, so as to limit thermal gradients.

A second aspect of the invention relates to a solar tower CST plant comprising :
- a solar tower with an energy direct absorption receiver located atop the solar tower ;
- a heliostat field made of mirrors reflecting and concentrating solar energy onto the direct absorption receiver ;
- a closed circuit for conveying heat transfer particles from the direct absorption receiver to a particle heat exchanger as described above, and back to the direct absorption receiver, said circuit also comprising a particle hot storage tank, a particle cold storage tank and a particle transport system ;

in which said heat exchanger is used to produce superheated steam in a one-through steam generator circuit connected to a turbine intended to generate electricity ;
so that, successively, hot particles stored in the hot storage tank at a temperature of 950°C to 1000°C are directed to the particle heat exchanger inlet ; a fixed bed of particles goes downward very slowly in the heat exchanger under the action of gravity, the particles transferring their heat to the tube bundle of the particle heat exchanger, in which tube bundle water, as a coolant fluid, is flowing, superheated steam being then generated in the heat exchanger/steam generator circuit connected to the steam turbine, cooled and further directed to a condenser and back to the particle heat exchanger in liquid state, said heat exchanger being countercurrent with cold coolant fluid arriving in an inlet header located at the bottom of the heat exchanger and leaving, after heating, through an outlet header located at the top thereof, cold particles at the exit of the heat exchanger being directed to the cold storage tank and further to the direct absorption receiver thanks to the particle transport system, preferably a worm screw.

Alternately, in the solar tower CST plant, the particle heat exchanger is replaced by a heat exchanger in which the tube bundle contains, instead of water, supercritical CO₂ operated according to a recompression Brayton cycle.

### Brief Description of the Drawings

FIG. 1 schematically represents a perspective view of a particle heat exchanger embodiment according to the present invention, including the casing panels.
FIG. 2 schematically represents a cross-sectional view of the particle heat exchanger represented in FIG. 1.
FIG. 3 shows the piping and instrumentation diagram (P&ID) for a heat exchanger embodiment according to the present invention.
FIG. 4 schematically represents a general view for specific tube elbows of the tubes in the heat exchanger according to the present invention (A), as well as a detailed view thereof (B).
FIG. 5 schematically represents an example of solar tower power plant in which the particle heat exchanger allows to generate superheated steam for feeding a steam turbine.
FIG. 6 schematically represents an embodiment of the tubesheet independent plates in the heat exchanger of the present invention.
FIG. 7A and FIG. 7B schematically represent an embodiment of the specific design of the sliding parts for attaching the tubesheets, according to the present invention.
FIG. 8 schematically represents the structure of the insulation of the casing from the hot abrasive particles in the heat exchanger according to the present invention.

### Description of Preferred Embodiments of the Invention

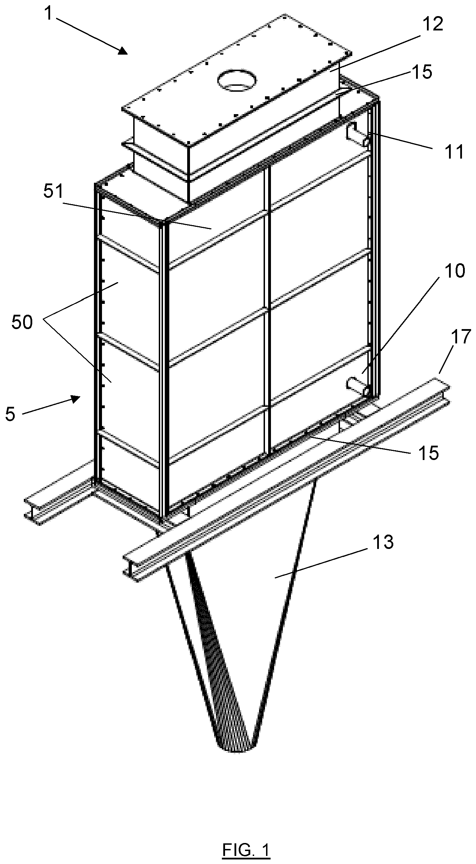

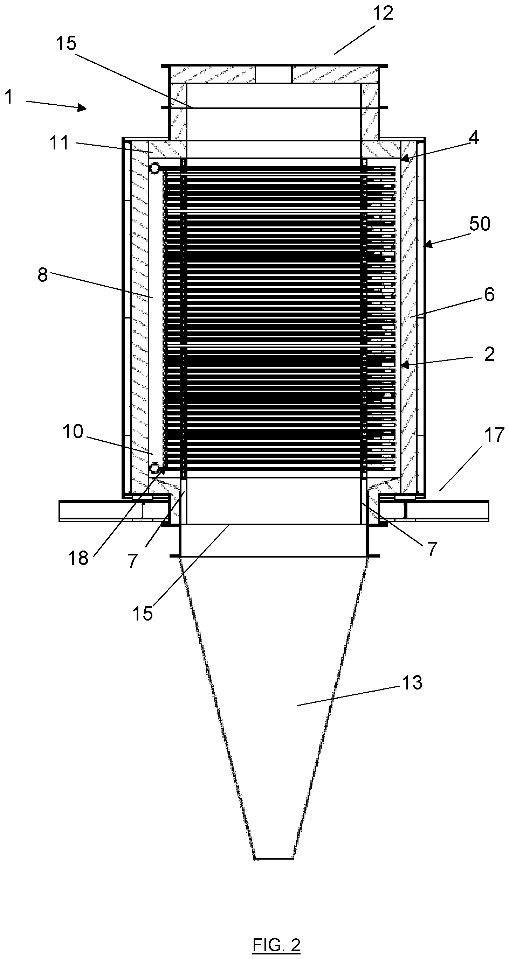

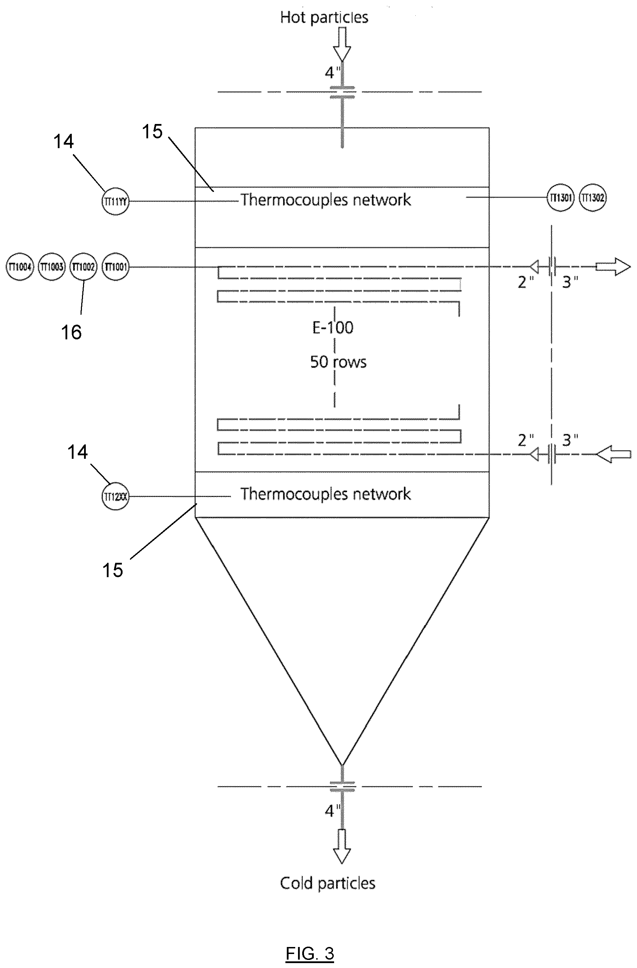

A general structural arrangement of the particle heat exchanger according to the present invention is shown on FIG. 1, FIG. 2, FIG. 3 and FIG. 4. The particle heat exchanger 1 is composed, fully or partly, of the following parts:
- a tube bundle 2 in which a coolant fluid is circulated and heated. The tubes 3 in the bundle 2 are arranged in successive rows, i.e. horizontally, and are in staggered configuration. In order to increase coolant fluid speed, the tubes 3 can be multi-passes. The spacing 4 between the tubes 3 is very low in order to increase the compactness and the heat transfer between the particles and the tubes ;
- tubes 3 preferably made of nickel superalloy SB-444 N06625 Grade 2 ;
- a casing 5 inside which hot particles are flowing. This casing 5, preferably made of carbon steel, will be composed of removable screwed panels 50. Some stiffeners 51 will be disposed on the panels 50 ;
- insulation layers 6 to protect the casing 5 from the hot abrasive particles and to maintain it at the temperature of 60°C for example. The insulant will be composed of alumina refractory concrete in series with microporous superinsulant (see below). The concrete layer will be disposed on metallic meshes that will be maintained fixed thank to clips attached to pins welded to the casing (see below) ;
- tubesheets 7 to support the tube bundle 2 disposed on each lateral side along the heat exchanger longitudinal direction. Preferably such tubesheets 7 will be made of heat resistant stainless steel such as Avesta^{®} SA 240 S30815 and specifically of SB-435 N06230 for the tubesheets exposed to the hottest particles. The tubesheets 7 will be composed of independent plates (one for each row) that will be deposited on the top of each other (not shown). These plates will be maintained thank to sliding pieces that are insulated and attached to the shell (not shown) ;
- dead chambers 8 between the tubesheets 7 and the casing 5 of the heat exchanger. These dead chambers 8 are empty of particles ;
- headers, among which a first one 10 is located at the inlet of the coolant fluid in the heat exchanger 1 and a second one 11 is located at the outlet of the coolant fluid. The tubes 3 will be connected to the headers 10, 11 and the coolant fluid's flow will be evenly distributed in the tubes 3 ;
- elbows 21 made by tube bendings to connect the tubes 3, in a same horizontal row or between two successive horizontal rows. To make the horizontal spacing possible, a special design of elbows between tubes of a same row has to be adopted ;
- an inlet rectangular part 12, high enough to distribute the particles uniformly in the heat exchanger 1 at a speed of 2-3 mm/s ;
- an outlet conical part 13 designed such that the particle mass flow at the outlet of the heat exchanger is acceptable (mass flow instead of a funnel flow) ;
- thermocouples 14 at the inlet and at the outlet of the heat exchanger at particle side. These thermocouples will be disposed before and after the tube bundle and will be enclosed in a sliding drawer 15. Thanks to this removable part, in case of issue with a thermocouple 14, the latter could be easily replaced. Thermocouples 16 will also be disposed at the bends of tubes 2 of the last row (before leaving the heat exchanger) in order to capture their metal temperature ;
- a structure with beams 17 to withstand the whole heat exchanger weight ;
- slopes 18 foreseen at the bottom of the dead chambers 8 to drain particles in case of sealing issue in the heat exchanger. These slopes 18 are connected to the outlet part 13 of the heat exchanger 1.

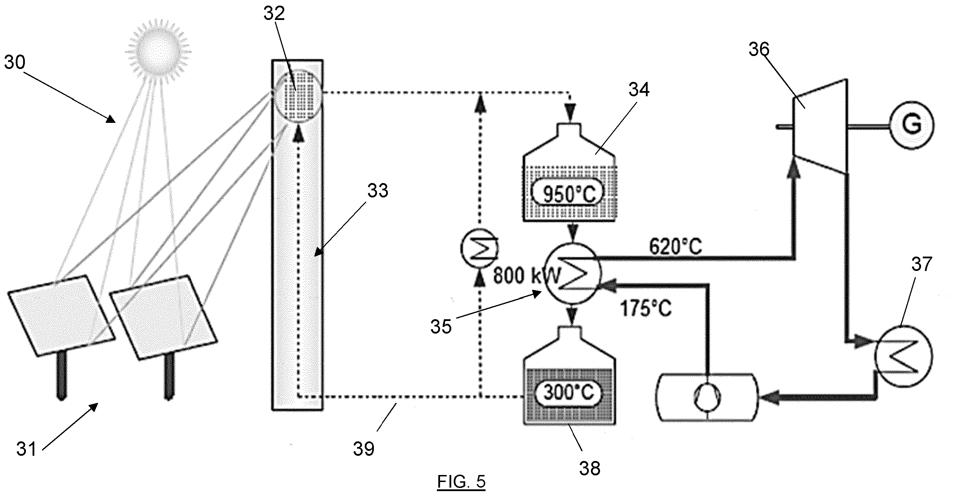

Functionally, the operation of the particle heat exchanger according to the invention in the example of a particle solar tower power plant 30 is shown on FIG. 5 and discussed here below. Solar energy is reflected by the mirrors of the heliostat field 31 and concentrated onto a direct absorption particle receiver 32 located on top of a solar tower 33. Hot particles are stored in a hot storage tank 34 at high-temperature (950-1000°C) and connected to the receiver 32. The particles are directed to the heat exchanger 35 inlet thanks to an entry pipe and the fixed bed of particles goes downward very slowly in the casing of the heat exchanger 35 under the action of gravity. By moving down in the heat exchanger, the particles transfer their heat to the tube bundle(s) of the heat exchanger 35, in which a coolant fluid, for example water, is flowing. Steam is then generated in the heat exchanger/steam generator circuit connected to a steam turbine 36. The superheated steam at the exit of the heat exchanger 35 is for example at a temperature of 620°C. After passing the steam turbine 36 and condenser 37, liquid water returns to the heat exchanger at a temperature of 175°C for example. The heat exchanger 35 is preferably countercurrent: the cold coolant fluid arrives in the header located at the bottom of the heat exchanger and leaves, after heating, through the outlet header located at the top thereof. After having crossed and contacted the tube bundle, the cold particles are directed to the cold storage tank 38 through the outlet conical piece of the heat exchanger and then further directed to the particle receiver 32 using a particle transport system 39, preferably a mechanical system such as a worm screw.

In an alternate embodiment, the particle heat exchanger according to the invention contains supercritical CO₂ operated according to a recompression Brayton cycle (not shown).

### Specificities and advantages of the invention

Firstly, while presenting some similarities with the heat exchangers of prior art (WO 2013/163752 A1, WO2021/030875 A1), the heat exchanger of the present invention is based on a transverse tube design and not on a concept of plates or vertical tubes/channels, characterized by the absence of stagnant zones or slowing down zones for the particles.

One advantage of a heat exchanger designed with a tube bundle is that it is more suitable to resist to high-pressure fluid circulating inside the tubes, which would be the case for example if this heat exchanger is operated with supercritical CO₂. In addition, the tube-in-shell design of the invention is superior with respect to severe thermal transients and temperature ramps. Further the sCO₂ system does not use water, which is significant knowing that CSP plants are typically located in hot and dry climates where water is scarce.

Additionally, heating sCO2 directly delivers benefits that are most pronounced with smaller systems that have a few hours of thermal storage, including the ability to place the power cycle in the receiver to minimize the length and cost of high pressure piping. Both novel power receiver approaches (particles and sCO₂) have numerous potential advantages that void the current limitations of CSP systems using molten salt as a heat transfer fluid (HTF) and/or for thermal energy storage (TES).

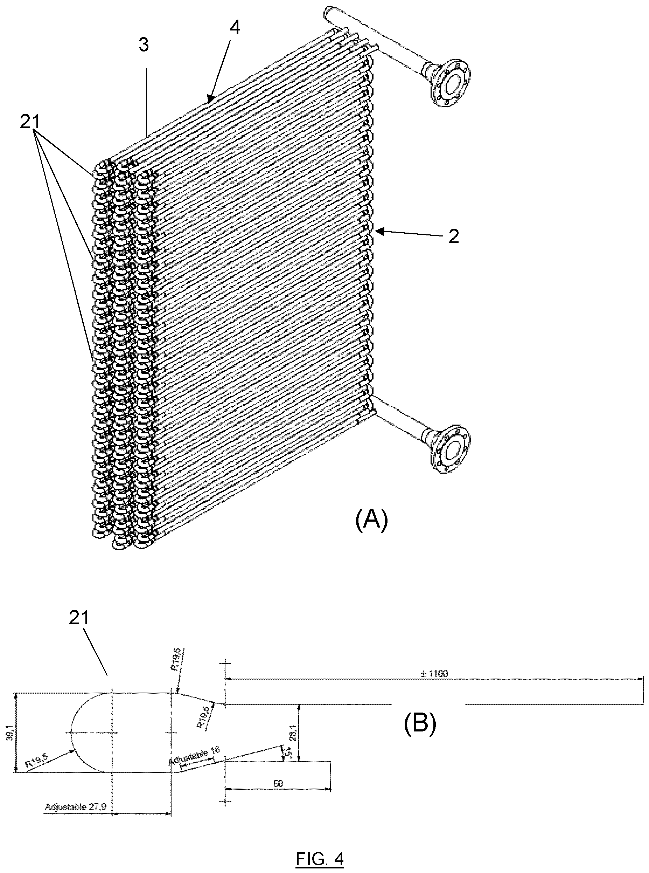

Secondly, as shown on FIG. 4, the design of specific tubes with elbows is such that a small spacing between tubes (about 9 mm, corresponding to 10 times the diameter of bauxite particles) is possible without exceeding the allowable maximum elbow bending radius (according to manufacture constraints). This specificity enables high compactness of the tube bundle of the particle heat exchanger. The small spacing between tubes has a very positive impact on the heat transfer efficiency between the particles and the tubes.

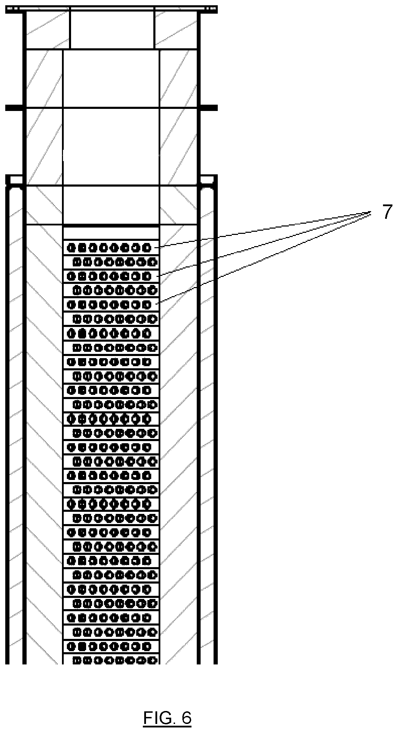

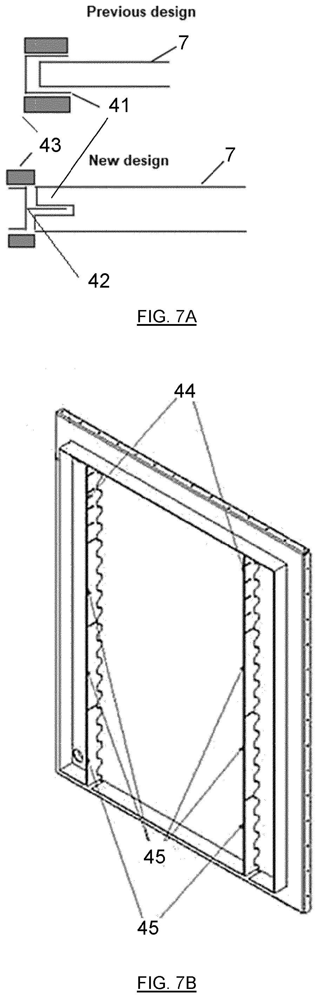

Thirdly, a tubesheet design is originally provided to support the tubes, under the form of a set of plates 7 (one for each tube row) that are stacked on top of each other without connection (FIG. 6) and further maintained by an insulated sliding pieces (see FIG. 7A and FIG. 7B). The tubesheet plates 7 are supported by the heat exchanger bottom and the sliding pieces are welded to the casing 5. This design enables to break the important thermal gradient between the top and the bottom of the heat exchanger in smaller ones seen by each part. As a result, thermal stress in strongly reduced. In order to resist to particles at the highest temperatures, nickel superalloy (e.g. H230) is advantageously used for a few plates located at the top of the heat exchanger, the other plates being in refractory alloy. Furthermore sliding pieces are made for example of nickel superalloy H230 in the case of the two sliding pieces 44 exposed to the highest temperatures while the sliding pieces 45 exposed to lower temperatures are made of 304 stainless steel (see FIG. 7B).

Fourthly, in order to reduce the large thermal gradient (and therefore of additional thermal stresses) induced by the insulant 43 that covers the sliding part in current design, a sliding piece design will be a male part 42 with retracted insulation, while tubesheet plates will be a female part 41 (FIG. 7A).

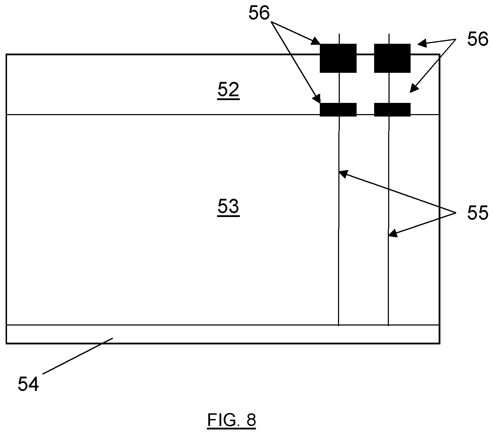

Fifthly, innovative heat exchanger insulation solutions are chosen to be resistant to high-temperature abrasive particles. For example, a first layer 52 of 20mm alumina refractory concrete protects the heat exchanger wall from the abrasion of the particles and an insulant layer 53 up to 90mm thick, such as microporous insulant (silica) is further provided to obtain an external temperature of about 60°C for the metal casing 54 (FIG. 8). The concrete layer will be applied on welded metallic meshes (not shown) that will be maintained fixed thank to clips 56 (with spacers, not shown) attached to equidistant pins 55 welded to the casing 54.

### List of reference symbols

- 1: heat exchanger
- 2: tube bundle
- 3: tube
- 4: spacing
- 5: casing
- 6: insulation layer
- 7: tubesheet
- 8: dead chamber
- 10: inlet header
- 11: outlet header
- 12: inlet rectangular part
- 13: outlet conical part
- 14: inlet/outlet thermocouple
- 15: sliding drawer
- 16: bend-located thermocouple
- 17: structure beam
- 18: draining slope
- 21: tube elbow
- 30: particle solar tower power plant
- 31: heliostat field
- 32: direct absorption particle receiver
- 33: solar tower
- 34: hot storage tank
- 35: heat exchanger (per se)
- 36: steam turbine
- 37: condenser
- 38: cold storage tank
- 39: particle transport system
- 41: female part
- 42: male part
- 43: insulant
- 44: sliding piece in nickel superalloy H230
- 45: sliding piece in 304 stainless steel
- 50: casing panel
- 51: stiffener
- 52: refractory concrete insulant
- 53: insulant
- 54: casing metal
- 55: pin
- 56: clip

## Claims

1. A heat exchanger (1) comprising a casing (5), said casing (5) including a top inlet part (12) for receiving hot solid particles and a bottom outlet part (13) for discharging the solid particles after cooling ; and a plurality of spaced apart adjacent heat transfer tubes (2) disposed in the casing (5) between the top inlet part (12) and the bottom outlet part (13), assembled in at least one tube bundle (3) and intended for the circulation of a coolant fluid, for cooling the solid particles that flow downwards by gravity from the inlet, between the spaced apart adjacent heat transfer tubes (2), to the outlet, wherein the spaced apart adjacent heat transfer tubes (2) are arranged in rows substantially transverse to the flow direction of the solid particles, wherein the tube bundle (3) is supported in the casing (5) by at least two tubesheets (7) disposed vertically and laterally near each of both ends of the tubes (2) and **characterised in that** each tubesheet (7) is composed of independent plates corresponding to the individual tube rows, adjacent plates being stacked on top of each other thanks to insulated sliding pieces (43).

2. The heat exchanger (1) according to claim 1, wherein each substantially transverse tube (2) is connected at each of its ends to another substantially transverse tube (2), either in a same horizontal row or between two successive horizontal rows, thanks to a 180° pipe elbow (21).

3. The heat exchanger (1) according to claim 1, wherein dead chambers (8) are at least partly separating the tubes (2) and tubesheets (7) from the casing (5), so that in use no particles are present in the dead chambers (8).

4. The heat exchanger (1) according to claim 1, wherein it further contains an insulation (6) located on the internal side of the casing (5) and protecting the casing (5) from the particles abrasion.

5. The heat exchanger (1) according to claim 4, wherein the insulation (6) comprises a layer of refractory concrete (52) in series with a microporous superinsulant (53), said concrete layer (52) being disposed on a metallic mesh maintained with clips (56) attached to pins (55) welded on the casing (54).

6. The heat exchanger (1) according to claim 1, wherein the tubes (3) are respectively connected to an inlet header (10) located in the bottom of the casing (5) and to an outlet header (11) located in the top of the casing (5), so that the coolant fluid is flowing countercurrent in the heat exchanger.

7. The heat exchanger (1) according to claim 2, wherein the connections between the substantially transverse tubes (2) comprising a 180° pipe elbow (21) are designed so as to allow horizontal spacing between the tubes of a same row as low as 9mm without exceeding a maximum allowable bending radius.

8. The heat exchanger (1) according to claim 7, wherein said horizontal spacing between the tubes (2) is at least 2.5 times, preferably 10 times, the diameter of the particles.

9. The heat exchanger (1) according to claim 1, wherein the top inlet part (12) has a rectangular cross-section and a height suitable to uniformly distribute the particles in the heat exchanger and the bottom outlet part (13) is an outlet conical part for assuring suitable mass flow.

10. The heat exchanger (1) according to claim 1, wherein first thermocouples (14) are disposed at the inlet and the outlet of the heat exchanger, respectively before and after the tube bundle (3), and second thermocouples (16) are disposed at the tube bends of the last tube row before the outlet, said first thermocouples (14) being also disposed in corresponding sliding drawers (15).

11. The heat exchanger (1) according to claim 3, wherein at least one slope (18) is arranged at the bottom of the dead chambers (8) so as to drain particles in case of sealing issue.

12. The heat exchanger (1) according to claim 1, wherein the connecting end of the tubesheet plates (7) with the insulated sliding piece is of female design (41), while the connecting end of the insulated sliding piece (43) is of male design (42), so as to limit thermal gradients.

13. A solar tower CSP plant (30) comprising :
- a solar tower (33) with an energy direct absorption receiver (32) located atop the solar tower (33) ;
- a heliostat field (31) made of mirrors reflecting and concentrating solar energy onto the direct absorption receiver (32) ;
- a closed circuit for conveying heat transfer particles from the direct absorption receiver (32) to a particle heat exchanger (1, 35) according to anyone of the preceding claims, and back to the direct absorption receiver (32), said closed circuit also comprising a particle hot storage tank (34), a particle cold storage tank (38) and a particle transport system (39) ;
in which said heat exchanger (1, 35) is used to produce superheated steam in a one-through steam generator circuit connected to a turbine (36) intended to generate electricity ;
so that, successively, hot particles stored in the hot storage tank (34) at a temperature of 950°C to 1000°C are directed to the particle heat exchanger (1, 35) inlet ; a fixed bed of particles goes downward very slowly in the heat exchanger (1, 35) under the action of gravity, the particles transferring their heat to the tube bundle of the particle heat exchanger (35), in which tube bundle water, as a coolant fluid, is flowing, superheated steam being then generated in the heat exchanger/steam generator circuit connected to the steam turbine (36), cooled and further directed to a condenser (37) and back to the particle heat exchanger (1, 35) in liquid state, said heat exchanger being countercurrent with cold coolant fluid arriving in an inlet header located at the bottom of the heat exchanger (1, 35) and leaving, after heating, through an outlet header located at the top thereof, cold particles at the exit of the heat exchanger (1, 35) being directed to the cold storage tank (38) and further to the direct absorption receiver (32) thanks to the particle transport system (39), preferably a worm screw.

14. The solar tower power CSP plant (30) according to claim 13, wherein the particle heat exchanger (1, 35) is replaced by a heat exchanger in which the tube bundle contains, instead of water, supercritical CO₂ operated according to a recompression Brayton cycle.

## Patentansprüche

1. Wärmetauscher (1), umfassend ein Gehäuse (5), wobei das Gehäuse (5) ein oberes Einlassteil (12) zum Aufnehmen heißer Feststoffpartikel und ein unteres Auslassteil (13) zum Ausgeben der Feststoffpartikel nach Abkühlen beinhaltet; und eine Vielzahl von beabstandeten, angrenzenden Wärmeübertragungsrohren (2), die in dem Gehäuse (5) zwischen dem oberen Einlassteil (12) und dem unteren Auslassteil (13) angeordnet sind, die in mindestens einem Rohrbündel (3) zusammengesetzt sind und für die Zirkulation eines Kühlfluids bestimmt sind, um die festen Partikel zu kühlen, die durch Schwerkraft von dem Einlass zwischen den beabstandeten, angrenzenden Wärmeübertragungsrohren (2) nach unten zu dem Auslass fließen, wobei die beabstandeten, angrenzenden Wärmeübertragungsrohre (2) in Reihen im Wesentlichen quer zu der Strömungsrichtung der Feststoffpartikel angeordnet sind, wobei das Rohrbündel (3) in dem Gehäuse (5) durch mindestens zwei Rohrböden (7) getragen wird, die vertikal und seitlich in der Nähe von jedem der zwei Enden der Rohre (2) angeordnet sind, und **dadurch gekennzeichnet, dass** jeder Rohrboden (7) aus unabhängigen Platten besteht, die den einzelnen Rohrreihen entsprechen, angrenzende Platten dank isolierter Gleitstücke (43) übereinander gestapelt sind.

2. Wärmetauscher (1) nach Anspruch 1, wobei jedes im Wesentlichen querliegende Rohr (2) an jedem seiner Enden mit einem anderen im Wesentlichen querliegenden Rohr (2) dank eines 180°-Rohrbogens (21) entweder in einer gleichen horizontalen Reihe oder zwischen zwei aufeinanderfolgenden horizontalen Reihen verbunden ist.

3. Wärmetauscher (1) nach Anspruch 1, wobei tote Kammern (8) die Rohre (2) und Rohrböden (7) zumindest teilweise von dem Gehäuse (5) trennen, sodass im Gebrauch keine Partikel in den toten Kammern (8) vorhanden sind.

4. Wärmetauscher (1) nach Anspruch 1, wobei er ferner eine Isolierung (6) enthält, die sich an der Innenseite des Gehäuses (5) befindet und das Gehäuse (5) vor dem Partikelabrieb schützt.

5. Wärmetauscher (1) nach Anspruch 4, **dadurch gekennzeichnet, dass** die Isolierung (6) eine Schicht aus feuerfestem Beton (52) in Reihe mit einem mikroporösen Superisoliermittel (53) umfasst, wobei die Betonschicht (52) auf einem Metallgitter angeordnet ist, das mit Klammern (56) gehalten wird, die an Stiften (55) befestigt sind, die an das Gehäuse (54) geschweißt sind.

6. Wärmetauscher (1) nach Anspruch 1, wobei die Rohre (3) jeweils mit einem Einlasskrümmer (10), der sich in dem Boden des Gehäuses (5) befindet, und mit einem Auslasskrümmer (11), der sich in der Oberseite des Gehäuses (5) befindet, verbunden sind, sodass das Kühlfluid in dem Wärmetauscher in Gegenstrom strömt.

7. Wärmetauscher (1) nach Anspruch 2, wobei die Verbindungen zwischen den im Wesentlichen querliegenden Rohren (2), die einen 180°-Rohrbogen (21) umfassen, konstruiert sind, um einen horizontalen Abstand zwischen den Rohren einer gleichen Reihe von nur 9 mm zu ermöglichen, ohne einen maximal zulässigen Biegeradius zu überschreiten.

8. Wärmetauscher (1) nach Anspruch 7, wobei der horizontale Abstand zwischen den Rohren (2) mindestens das 2,5-fache, vorzugsweise das 10-fache, des Durchmessers der Partikel ist.

9. Wärmetauscher (1) nach Anspruch 1, wobei der obere Einlassteil (12) einen rechteckigen Querschnitt und eine Höhe aufweist, die geeignet ist, um die Partikel gleichmäßig in dem Wärmetauscher zu verteilen, und das untere Auslassteil (13) ein konisches Auslassteil ist, um einen geeigneten Massenstrom zu gewährleisten.

10. Wärmetauscher (1) nach Anspruch 1, wobei erste Thermoelemente (14) an dem Einlass und an dem Auslass des Wärmetauschers jeweils vor und nach dem Rohrbündel (3) angeordnet sind, und zweite Thermoelemente (16) an den Rohrbiegungen der letzten Rohrreihe vor dem Auslass angeordnet sind, wobei die ersten Thermoelemente (14) auch in entsprechenden Einschüben (15) angeordnet sind.

11. Wärmetauscher (1) nach Anspruch 3, wobei an dem Boden der toten Kammern (8) mindestens eine Schräge (18) angeordnet ist, um im Falle eines Dichtungsproblems Partikel abzulassen.

12. Wärmetauscher (1) nach Anspruch 1, wobei das Verbindungsende der Rohrbodenplatten (7) mit dem isolierten Gleitstück eine Buchsenkonstruktion (41) und das Verbindungsende des isolierten Gleitstücks (43) eine Steckkonstruktion (42) ist, um thermische Gradienten zu begrenzen.

13. Solarturm-CSP-Anlage (30), umfassend:
- einen Solarturm (33) mit einem Energie-Direktabsorptionsempfänger (32), der sich auf dem Solarturm (33) befindet;
- ein Heliostatenfeld (31), das aus Spiegeln gefertigt ist und die Sonnenenergie reflektieren und auf den Direktabsorptionsempfänger (32) konzentrieren;
- einen geschlossenen Kreislauf zum Transportieren von Wärmeübertragungspartikeln von dem Direktabsorptionsempfänger (32) zu einem Partikelwärmetauscher (1, 35) nach einem der vorherigen Ansprüche und zurück zu dem Direktabsorptionsempfänger (32), wobei der geschlossene Kreislauf ferner einen Speicher für heiße Partikel (34), einen Speicher für kalte Partikel (38) und ein Partikeltransportsystem (39) umfasst;
wobei der Wärmetauscher (1, 35) zum Erzeugen von überhitztem Dampf in einem Durchgangsdampferzeugerkreislauf verwendet wird, der mit einer Turbine (36) verbunden ist, die zur Stromerzeugung bestimmt ist;
sodass nacheinander heiße Partikel, die in dem Heißwasserspeicher (34) bei einer Temperatur von 950 °C bis 1000 °C gelagert werden, zu dem Eingang des Partikelwärmetauschers (1, 35) geleitet werden; ein festes Bett aus Partikeln in dem Wärmetauscher (1, 35) unter der Wirkung von Schwerkraft sehr langsam nach unten sinkt, die Partikel ihre Wärme an das Rohrbündel des Partikelwärmetauschers (35) übertragen, in dem Wasser als Kühfluid strömt, wobei dann in dem mit der Dampfturbine (36) verbundenen Wärmetauscher/Dampferzeugerkreislauf überhitzter Dampf erzeugt, abgekühlt und weiter zu einem Kondensator (37) und in flüssigem Zustand zurück zu dem Partikelwärmetauscher (1, 35) geleitet wird, wobei der Wärmetauscher in Gegenstrom mit kaltem Kühlfluid betrieben wird, das in einen Einlasskrümmer an dem Boden des Wärmetauschers (1, 35) eintritt und nach Erhitzen durch einen Auslasskrümmer austritt, der sich an der Oberseite davon befindet, kalte Partikel an dem Ausgang des Wärmetauschers (1, 35) dank des Partikeltransportsystems (39), vorzugsweise einer Schnecke, in den kalten Speicherbehälter (38) und weiter in den Direktabsorptionsempfänger (32) geleitet werden.

14. Solarturm-CSP-Anlage (30) nach Anspruch 13, wobei der Partikelwärmetauscher (1, 35) durch einen Wärmetauscher ersetzt ist, in dem das Rohrbündel anstelle von Wasser überkritisches CO₂ enthält, das gemäß einem Rekompression-Brayton-Zyklus betrieben wird.

## Revendications

1. Échangeur de chaleur (1) comprenant un carter (5), ledit carter (5) comportant une partie d'admission supérieure (12) destinée à recevoir des particules solides chaudes et une partie d'évacuation inférieure (13) destinée à évacuer les particules solides après le refroidissement ; et une pluralité de tubes de transfert de chaleur adjacents espacés (2) disposés dans le carter (5) entre la partie d'admission supérieure (12) et la partie d'évacuation inférieure (13), assemblés dans au moins un faisceau de tubes (3) et destinés à la circulation d'un fluide frigorigène, afin de refroidir les particules solides qui circulent vers le bas par gravité depuis l'admission, entre les tubes de transfert de chaleur adjacents espacés (2), jusqu'à l'évacuation, dans lequel les tubes de transfert de chaleur adjacents espacés (2) sont prévus en rangées de manière sensiblement transversale par rapport à la direction de circulation des particules solides, dans lequel le faisceau de tubes (3) est supporté dans le carter (5) par au moins deux plaques tubulaires (7) disposées verticalement et latéralement près de chacune des deux extrémités des tubes (2), et **caractérisé en ce que** chaque plaque tubulaire (7) est composée de plaques indépendantes qui correspondent aux rangées de tubes individuelles, les plaques adjacentes étant empilées les unes sur les autres grâce à des pièces coulissantes isolées (43).

2. Échangeur de chaleur (1) selon la revendication 1, dans lequel chaque tube sensiblement transversal (2) est relié, au niveau de chacune de ses extrémités, à un autre tube sensiblement transversal (2), soit dans une même rangée horizontale, soit entre deux rangées horizontales successives, grâce à un coude de tuyau à 180° (21).

3. Échangeur de chaleur (1) selon la revendication 1, dans lequel des chambres mortes (8) séparent au moins partiellement les tubes (2) et les plaques tubulaires (7) du carter (5), de sorte que, pendant l'utilisation, aucune particule ne soit présente dans les chambres mortes (8).

4. Échangeur de chaleur (1) selon la revendication 1, qui contient en outre une isolation (6) située sur le côté interne du carter (5) et qui protège le carter (5) contre l'abrasion par les particules.

5. Échangeur de chaleur (1) selon la revendication 4, dans lequel l'isolation (6) comprend une couche de béton réfractaire (52) en série avec un superisolant microporeux (53), ladite couche de béton (52) étant disposée sur un maillage métallique maintenu avec des fixations (56) reliées à des broches (55) soudées sur le carter (54).

6. Échangeur de chaleur (1) selon la revendication 1, dans lequel les tubes (3) sont respectivement reliés à un collecteur d'admission (10) situé dans la partie inférieure du carter (5) et à un collecteur d'évacuation (11) situé dans la partie supérieure du carter (5), de sorte que le fluide frigorigène circule à contre-courant dans l'échangeur de chaleur.

7. Échangeur de chaleur (1) selon la revendication 2, dans lequel les raccordements entre les tubes sensiblement transversaux (2) comprenant un coude de tuyau à 180° (21) sont conçus de façon à permettre un espacement horizontal entre les tubes d'une même rangée de seulement 9 mm sans dépasser un rayon de courbure maximal autorisé.

8. Échangeur de chaleur (1) selon la revendication 7, dans lequel ledit espacement horizontal entre les tubes (2) est égal à au moins 2,5 fois, de préférence 10 fois, le diamètre des particules.

9. Échangeur de chaleur (1) selon la revendication 1, dans lequel la partie d'admission supérieure (12) présente une section transversale rectangulaire et une hauteur adaptées pour répartir uniformément les particules dans l'échangeur de chaleur et la partie d'évacuation inférieure (13) est une partie conique d'évacuation destinée à assurer un débit massique adéquat.

10. Échangeur de chaleur (1) selon la revendication 1, dans lequel des premiers thermocouples (14) sont disposés au niveau de l'admission et de l'évacuation de l'échangeur de chaleur, respectivement avant et après le faisceau de tubes (3), et des deuxièmes thermocouples (16) sont disposés au niveau des courbures de tubes de la dernière rangées de tubes avant l'évacuation, lesdits premiers thermocouples (14) étant également disposés dans des tiroirs coulissants correspondants (15).

11. Échangeur de chaleur (1) selon la revendication 3, dans lequel au moins une inclinaison (18) est prévue au niveau de la partie inférieure des chambres mortes (8) de façon à éliminer les particules en cas de problème d'étanchéité.

12. Échangeur de chaleur (1) selon la revendication 1, dans lequel l'extrémité de raccordement des plaques tubulaires (7) avec la pièce coulissante isolée est de type femelle (41), tandis que l'extrémité de raccordement de la pièce coulissante isolée (43) est de type mâle (42), de façon à limiter les gradients thermiques.

13. Unité à énergie solaire concentrée de tour solaire (30) comprenant :
- une tour solaire (33) avec un récepteur à absorption directe de l'énergie (32) située en haut de la tour solaire (33) ;
- un champ d'héliostats (31) composé de miroirs qui réfléchissent et concentrent l'énergie solaire vers le récepteur à absorption directe (32) ;
- un circuit fermé destiné à acheminer des particules de transfert de chaleur du récepteur à absorption directe (32) jusqu'à un échangeur de chaleur à particules (1, 35) selon l'une quelconque des revendications précédentes, puis de nouveau vers le récepteur à absorption directe (32), ledit circuit fermé comprenant en outre un réservoir de stockage chaud de particules (34), un réservoir de stockage froid de particules (38) et un système de transport de particules (39) ;
dans lequel ledit échangeur de chaleur (1, 35) est utilisé pour produire de la vapeur surchauffée dans un circuit de générateur de vapeur à un seul passage relié à une turbine (36) destinée à générer de l'électricité ;
de sorte que, successivement, les particules chaudes stockées dans le réservoir de stockage chaud (34) à une température de 950°C à 1000°C soient dirigées vers l'admission de l'échangeur de chaleur à particules (1, 35) ; un lit fixe de particules descende très lentement dans l'échangeur de chaleur (1, 35) sous l'action de la gravité, les particules transférant leur chaleur au faisceau de tubes de l'échangeur de chaleur à particules (35), dans lequel faisceau de tubes de l'eau, en guide de fluide frigorigène, circule, de la valeur surchauffée étant ensuite générée dans le circuit de l'échangeur de chaleur/du générateur de vapeur relié à la turbine à vapeur (36), refroidie puis dirigée vers un condenseur (37) puis de nouveau vers l'échangeur de chaleur à particules (1, 35) à l'état liquide, ledit échangeur de chaleur étant à contre-courant avec le fluide frigorigène froid qui arrive dans un collecteur d'admission situé au niveau de la partie inférieure de l'échangeur de chaleur (1, 35) et qui sort, après avoir été chauffé, par un collecteur d'évacuation situé au niveau de la partie supérieure de celui-ci, les particules froides à la sortie de l'échangeur de chaleur (1, 35) étant dirigées vers le réservoir de stockage froid (38) puis vers le récepteur à absorption directe (32) grâce au système de transport de particules (39), de préférence une vis sans fin.

14. Unité à énergie solaire concentrée de tour solaire (30) selon la revendication 13, dans laquelle l'échangeur de chaleur à particules (1, 35) est remplacé par un échangeur de chaleur dans lequel le faisceau de tubes contient, à la place de l'eau, du CO₂ supercritique utilisé selon un cycle de recompression de Brayton.
